# EUROPEAN PATENT SPECIFICATION

(11) **EP 2 037 120 B1**
(45) Date of publication and mention of the grant of the patent: **30.03.2011**
(21) Application number: 07301360.9
(22) Date of filing: 13.09.2007
(51) Int. Cl.: F03D 9/00, H01Q 1/00

(54) **Antenna/wind turbine device and communication station using the same**
Antennen-/Windturbinenvorrichtung und Kommunikationsstation damit
Antenne/dispositif d'éolienne et station de communication l'utilisant

(43) Date of publication of application: 18.03.2009
(73) Proprietor: Alcatel Lucent, 75008 Paris (FR)
(72) Inventor: Lucidarme, Thierry, 78180, MONTIGNY LE BRETONNEUX (FR); Lagrange, Patrick, 75014, PARIS (FR)
(74) Representative: Nicolle, Olivier

(56) References cited:
- WO-A-2005/068834
- DE-U1- 29 704 458
- US-A1- 2004 232 703
- US-A1- 2007 159 346

## Description

The technical domains of the invention are the domain of wind turbines and the domain of radiofrequency antennas.

More particularly, the invention concerns a device which combines the features of a wind turbine and the features of a radiofrequency antenna.

A communication station of any type always needs an antenna to, depending of its type, transmit, receive or both. In some remote areas (rural area, emerging countries, offshore...), a communication station also benefits from a standalone power supply, a green energy power supply being better. Such a green standalone power supply can be, among others, a wind turbine based generator. The main object of the invention is to incorporate a set of metallic emitting/receiving radiating elements, constituting at least a sectored antenna, hereafter named "facet" into some of the wind turbine blades. So doing, a device is produced that can be used both as a wind turbine and as an antenna.

US 2004/232703 discloses an apparatus comprised of a horizontal axis wind turbine tower holding or containing antenna type devices. Such antenna type devices may be utilized to receive and/or transmit communication signals.

However, the teaching of this document is not application to a vertical 1 axis type wind turbine, which presents a very different architecture.

The invention is directed to a device comprising an antenna and a wind turbine, said antenna comprising emitting/receiving radiating facets and said wind turbine having at least one wind turbine blade, said wind turbine having a vertical axis, and said antenna's emitting/receiving radiating facets being incorporated into some of said wind turbine blades.

Another feature of the invention is that the wind turbine blades incorporating the antenna's emitting/receiving radiating facets are static blades.

Alternately, said blades can also be rotating blades.

When wind turbine blades incorporating antenna's radiating facets are rotating ones, the same radio signal is advantageously transmitted to all antenna's emitting facets, to be emitted.

The wind turbine may be of any types, for example the advantageously transmitted to all antenna's emitting facets, to be emitted.

Advantageously, the wind turbine has a vertical axis.

The wind turbine may be of any types, for example the Darrieus, Savonius or Magnus type, or any combination of types.

The invention also concerns a communication station comprising an electronic unit, an antenna for emitting/receiving, a power supply for supplying electrical power to said electronic unit comprising a wind turbine, wherein the antenna and the wind turbine are a single device according to any one of the previous embodiments.

According to a first embodiment, the communication station comprises a rotor and a stator, wherein the electronic unit is wholly embedded onto the rotor.

Alternately, the electronic unit may be parted into a rotating part attached to the rotor and a static part attached to the stator, and the signals exchanged between rotating part and static part of said electronic unit are transmitted through a wireless link.

According to another feature of the invention, the electronic unit is parted into a rotating part attached to the rotor and a static part attached to the stator, so as the signals exchanged between rotating part and static part of said electronic unit are IQ radio samples according to CPRI recommendations.

Advantageously, the power supply further comprises solar cells.

The invention may be applied to a base transmitting station for mobile telephony.

Others features, details and advantages of the invention will become more apparent from the detailed illustrating description given hereafter with respect to the drawings on which:
- figure 1 is a sample of wind turbine (horizontal axis),
- figure 2 is another sample of wind turbine (vertical axis, Darrieus type),
- figure 3 is another sample of wind turbine (vertical axis, Savonius type),
- figure 4 is another sample of wind turbine (vertical axis, static and rotating blades),
- figure 5 is another sample of wind turbine (vertical axis, combination of Savonius and Darrieus types), showing cross polarized elements inside the rotating blades, composing an antenna's facet,
- figure 6 shows a preferred embodiment of a communication station,
- figure 7 is a graph figuring the electrical power produced vs the wind speed.

The main idea of the invention is to incorporate emitting/receiving radiating facets 4 pertaining to a radiofrequency antenna into some of the blades 2 of a wind turbine 1.

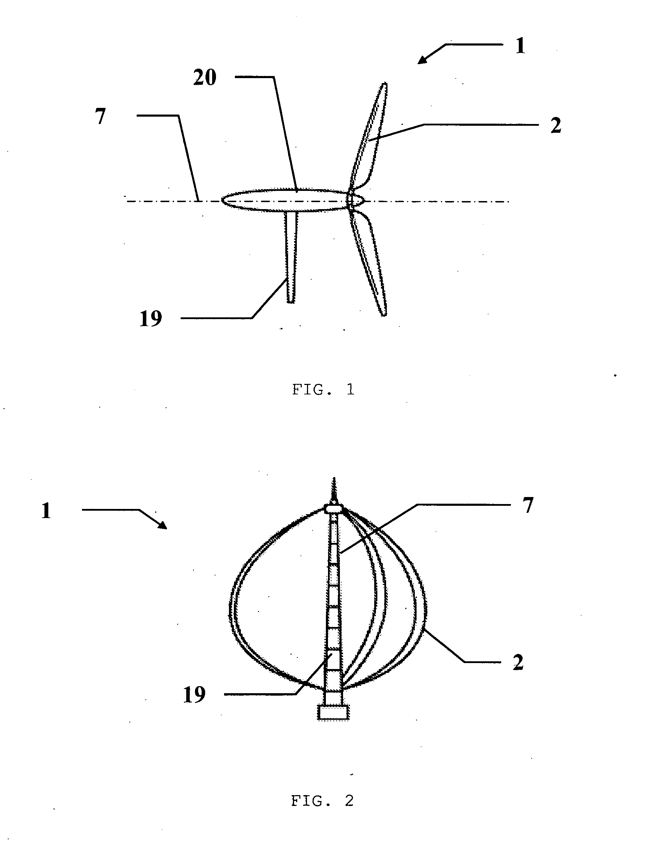

Referring to figures 1-5, showing different types of wind turbines, one can see that a wind turbine can takes many different shapes and settings.

Figure 1 shows a first type of wind turbine 1 not forming part of the present invention characterized in that it comprises a vertical mast 19, a nacelle 20 and a screw rotating around a horizontal axis 7, and comprising most of the time, two or three blades 2.

Figure 2 shows another type of wind turbine 1 characterized in that the mast 19 coincides with the rotation axis 7. Said rotation axis 7 is vertical. Around said axis 7 are disposed several rotating blades 2, here three blades are figured, driving the wind turbine 1 under appropriate wind conditions. Figure 2 illustrates a Darrieus type.

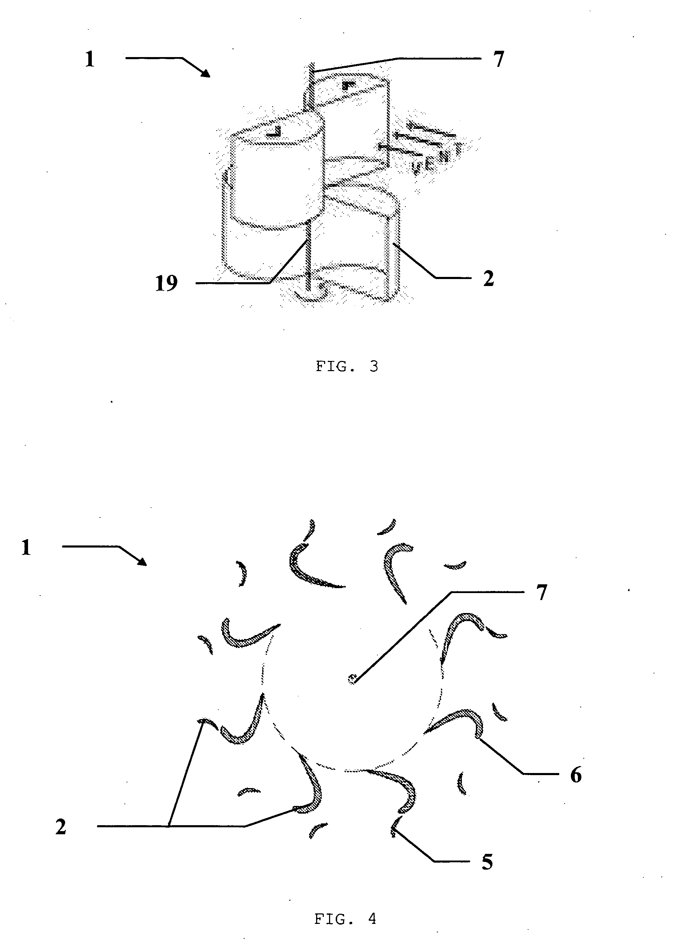

Figure 3 shows yet another type of wind turbine 1 also characterized in that the mast 19 coincides with the rotation axis 7. Said rotation axis 7 is vertical. Around said axis 7 are disposed several rotating blades 2, here four blades are figured, driving the wind turbine 1 under appropriate wind conditions. Figure 3 illustrates a Savonius type.

Figure 4 shows yet another type of wind turbine 1. The figure shows a top cross sectional view of a wind turbine according to the document FR 2889261A1 filed by the Gual company. Such a wind turbine 1 is a variant of a Savonius type. It is characterized by a double crown of blades 2. The wind turbine 1 has a vertical axis 7, and comprises an inner rotating crown of blades 6 and an outer static crown of blades 5. The static blades 5 lead the air flow in order to direct a smoother air flow to the inner rotating blades 6. Such an arrangement allows the wind turbine so formed to better function and an enhanced performance, even in areas of troubled winds.

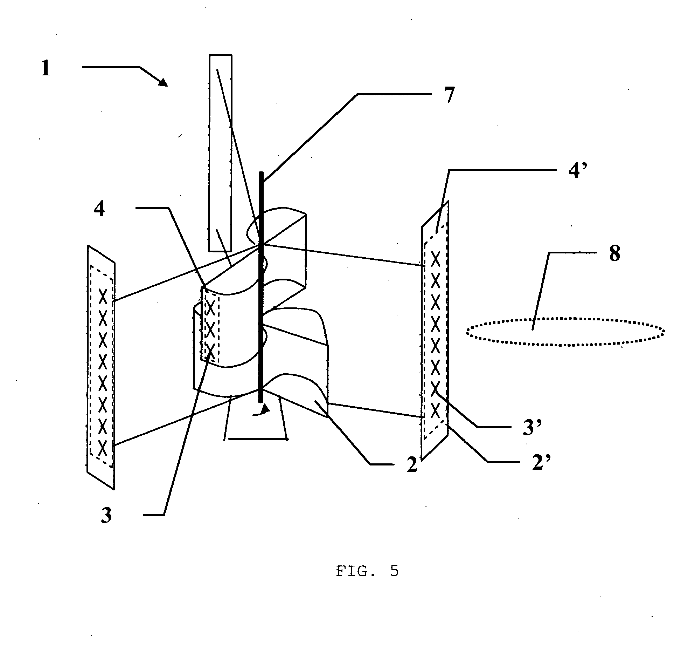

Others types of wind turbine, even not represented, are also possible and can benefit from the teachings of the invention. Each of these elementary types may be combined together. Figure 5 shows an example of such a combination. The wind turbine of figure 5 combine an inner Savonius type turbine with four blades 2, with an outer Darrieus type turbine with three blades 2'. A Savonius type wind turbine is advantageous in that it provides high torques at start time, but offers a lesser performance when the turbine rotates at steady state. At the opposite, a Darrieus type wind turbine offers a better yield performance at high speed steady state rotation, with the drawback that it is difficult to put on the move. The combination of both types, disposed on the same shaft advantageously compensates, to provide an efficient composite wind turbine 1.

In each case, the wind provides for a rotation of a part of the wind turbine 1, which rotation is used to drive a power generator so as to produce electric energy.

Despites some important differences in shape, the wind turbines all share a common feature: they all comprise blades 2, which blades 2 being made of composite non metallic material, advantageously transparent to radio waves. The one skilled in the art of plastic components knows many different way of manufacturing wind turbine blades.

Now referring to figure 5, is illustrated the main feature of the invention. A radiofrequency antenna comprises emitting/receiving radiating facets 4, 4' constituting some sectored antennas. As shown on figure 5, said antenna's facets may be incorporated into some of said wind turbine blades 2. Said facets 4 may be incorporated into some or all of the inner Savonius type blades 2. Said facets 4' may be incorporated into some or all of the outer Darrieus type blades 2' or both 2, 2'.

The metallic antenna's elements 3, 3', arranged in array and constituting the antenna's facets 4, 4', may be incorporated by any method known to the one skilled in the art, to add a metallic insert on or into a plastic part. It may be included in the mass of the part, affixed on either surface of the part, or even deposed by any metallic application process.

The facets 4' incorporated in blades 2' produce a radiofrequency lobe 8.

According to a preferred embodiment, said facets 4, 4' may be composed of crossed elements 3, 3', disposed 45° with respect to the vertical direction in order to provide a dual polarization antenna facet.

The radiofrequency need in term of dimensional (height width and/or surface) required for the facets 4, 4' to define an antenna is generally lesser than the corresponding dimensions available on the blades 2, 2'. Despites the facets 4 are regularly and symmetrically disposed angularly around the axis, they don't need to wholly cover the total surface of a blade 2, nor to cover all the blades 2. For radiofrequency purposes, a balanced antenna requires three or four regularly angularly spaced areas of equivalent facets. Depending of the setting of the blades 2, 2' only some of the blades may bear facets 4, 4'. For instance a wind turbine comprising twelve regularly angularly spaced blades may be provided with antenna's facets onto only two, three or four regularly spaced blades.

As illustrated on figure 4, a wind turbine may comprise both static 5 blades and rotating 6 blades. The antenna's emitting/receiving facets 4 may be incorporated in static blades 5, in rotating blades 6, or both of them.

For radiofrequency efficiency, the same radio signal is simultaneously transmitted to all the antenna's emitting facets 4 to be emitted. This is particularly suitable for an omni directional transmission.

The antenna's facets are applicable to a horizontal axis wind turbine type, as the one illustrated on figure 1. However, since, for most of transmission applications, the radiating lobe 8 is vertically pinched off (typically ∼6° beamwidth (BW)) and horizontally wider (typically ∼90° BW or more), a wind turbine 1 having a vertical axis 7 and thus providing revolution symmetry in the horizontal plan is preferred. The wind turbine 1 then advantageously has a vertical axis 7.

As previously detailed, the wind turbine 1 may be of any vertical axis typeincluding for instance the above-mentioned Darrieus, Savonius or Magnus type. It can also be formed of any combination of any vertical axis types.

The multi purpose device antenna/wind turbine thus obtained may advantageously be used in a system needing both an antenna and a wind turbine in the same reduced volume. A communication station 10 may be such a system.

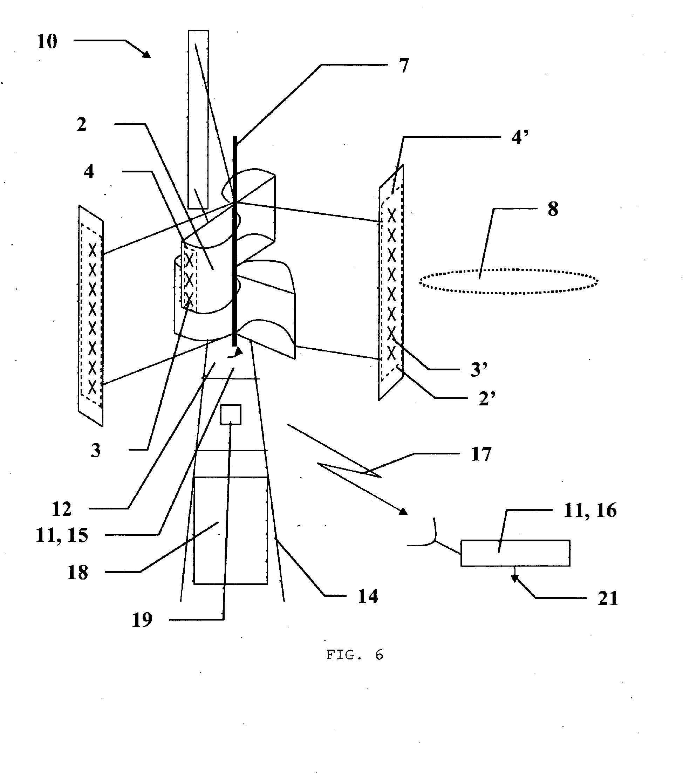

The present invention also concerns a communication station 10 of the kind illustrated at figure 6. Such a communication station 10 comprises an electronic unit 11, an antenna for radiofrequency emitting and/or receiving, a power supply 12 for supplying electrical power to said electronic unit 11. The power supply 12 comprises a wind turbine 1. According to the invention, the antenna and the wind turbine 1 are a single device according to one of the previously described devices. Said communication station 10 advantageously uses said device combining antenna and wind turbine 1.

Such a communication station 10 comprises a rotor 13 and a stator 14. The rotor 13 at least comprises the rotating part of the wind turbine 1, while the stator 14, comprises all the non rotating parts of the station. The stator 14 includes a support of said rotor 13, provides a fixed part standing from the ground, and may also comprises separate component as the one support part 16 on figure 6. According to a first embodiment, the whole electronic unit 11 may be embedded onto the rotor 13. Such an embodiment is possible when no external connexion is needed. For instance the station 10 acts as a transmission relay receiving signals and reemitting them. Such an embodiment fully embedding the electronic unit 11 avoid the use of any communication means between the rotor 13 and the stator 14.

According to a second embodiment, as illustrated on figure 6, the electronic unit 11 may be parted into a rotating part 15, attached to the rotor 13, and a static part 16 attached to the stator 14. Such a parted arrangement may for instance be required when the electronic unit 11, 16 must be connected to a network 21 port. The operating of the electronic unit 11 necessitates communication means and transmission of signals between rotating part 15 and static part 16 of said electronic unit 11. The transmission of said signals is problematic since the rotor 13 rotates, preferably endlessly, with respect to the stator 14. A classical, but nonetheless difficult solution, especially in a radiofrequency application, is to use a rotating joint. An alternate preferred solution employs a wireless link 17 to exchange signals between rotating part 15 and static part 16. such an arrangement may benefit from the use of a revolution rotating antenna 19, that may advantageously be manufactured on the rotor 13 as a conformed antenna.

The partition of the electronic unit 11 into a rotating part 15 and a static part 16 may be done at different logical levels. According to a preferred design, it can be done in order the signals exchanged between rotating part 15 and static part 16 of said electronic unit 11 are IQ radio samples according to CPRI recommendations. The CPRI is a normalisation entity providing recommendations in the radiofrequency technical domain. By choosing to part the electronic unit 11 in such a way, the communication station 10 may advantageously employs off-the-shelf equipments to build the electronic unit 11.

In order to provide power, the power supply 12, using a wind turbine 1 needs some wind. In absence of wind, such a power supply 12 advantageously comprises solar cells 18 to complete or enhance the energy supply.

The invention may be applied to a base transmitting station for mobile telephony.

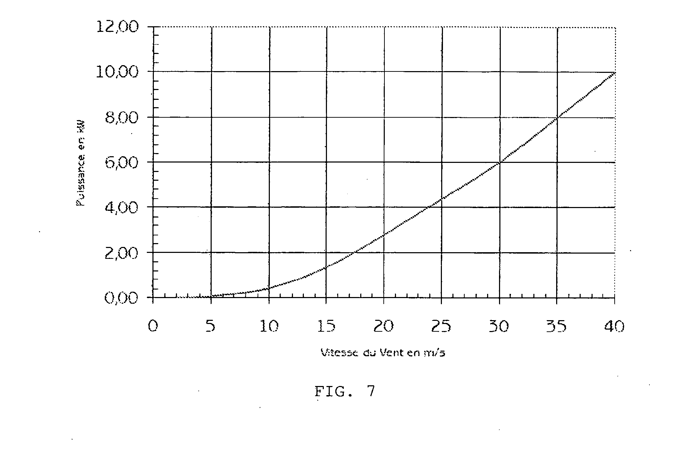

As a dimensioning, illustrative and non limitative sample, let suppose we want to power a UMTS base station consuming roughly 1kW. According to the dimensioning graph provided by Gual industry, and reproduced at figure 7, the whole power can be supplied by a wind turbine of 4 m diameter and 1.5m blades height. It is clear, for the one skilled in the art of radio transmission, that a 1.5m blades can incorporate the equivalent of a classical UMTS antenna facet whose height is currently the dimensioning parameter and is classically of 1.2m for a 17dBi gain antenna. The dimensions of the blades 2 (height, width and/or surface) are then sufficient to bear the facets corresponding to the same base station.

## Claims

1. A device comprising an antenna and a wind turbine (1) said antenna comprising emitting/receiving radiating facets (4) and said wind turbine (1) having at least one wind turbine blade (2), **characterized in that** said wind turbine (1) has a vertical axis (7), and said antenna's emitting/receiving radiating facets (4) are incorporated into some of said wind turbine blades (2).

2. The device of claim 1 wherein the wind turbine blades (2) incorporating the antenna's emitting/receiving radiating facets (4) are static blades (5).

3. The device of claim 1 or 2 wherein the wind turbine blades (2) incorporating the antenna's emitting/receiving radiating facets (4) are rotating blades (6).

4. The device of claim 3, wherein the same radio signal is transmitted to all antenna's emitting facets (4), to be emitted.

5. The device of an one of claims 1 to 4 wherein the wind turbine (1) is of any vertical axis type including the Darrieus, Savonius or Magnus type, or any combination of vertical axis types.

6. A communication station (10) comprising an electronic unit (11), an antenna for emitting/receiving, a power supply (12) for supplying electrical power to said electronic unit (11) comprising a wind turbine (1), wherein the antenna and the wind turbine (1) are a single device according to any one of claims 1 to 5.

7. The communication station of claim 6, comprising a rotor (13) and a stator (14), wherein the electronic unit (11) is embedded onto the rotor (13).

8. The communication station of claim 6, comprising a rotor (13) and a stator (14), said electronic unit (11) being parted into a rotating part (15) attached to the rotor (13) and a static part (16) attached to the stator (14), wherein signals between rotating part (15) and static part (16) of said electronic unit (11) are transmitted through a wireless link (17).

9. The communication station of claim 8 wherein said electronic unit (11) is parted into a rotating part (15) attached to the rotor (13) and a static part (16) attached to the stator (14), so as the signals exchanged between rotating part (15) and static part (16) of said electronic unit (11) are IQ radio samples according to CPRI recommendations.

10. The communication station of any one of claims 6 to 9 wherein the power supply (12) further comprises solar cells (18) .

11. The communication station of any one of claims 6 to 10 where the communication station is a base transmitting station for mobile telephony.

## Patentansprüche

1. Vorrichtung, umfassend eine Antenne und eine Windturbine (1), wobei die besagte Antenne abstrahlende Sende-/Empfangsfacetten (4) umfasst und die besagte Windturbine (1) mindestens ein Windturbinenblatt (2) aufweist, **dadurch gekennzeichnet, dass** die besagte Windturbine (1) eine vertikale Achse (7) aufweist und die besagten abstrahlenden Sende-/Empfangsfacetten (4) der Antenne in einige der besagten Windturbinenblätter (2) eingebaut sind.

2. Die Vorrichtung nach Anspruch 1, wobei die Windturbinenblätter (2), in welche die abstrahlenden Sende-/Empfangsfacetten (4) der Antenne eingebaut sind, statische Blätter (5) sind.

3. Die Vorrichtung nach Anspruch 1 oder 2, wobei die Windturbinenblätter (2), in welche die abstrahlenden Sende-/Empfangsfacetten (4) der Antenne eingebaut sind, rotierende Blätter (6) sind.

4. Die Vorrichtung nach Anspruch 3, wobei an alle Sendefacetten (4) der Antenne dasselbe Funksignal für die Ausstrahlung übertragen wird.

5. Die Vorrichtung nach einem beliebigen der Ansprüche 1 bis 4, wobei die Windturbine (1) eine vertikale Achse eines beliebigen Typs, einschließlich vom Typ Darrieus, Savonius oder Magnus, oder eine vertikale Achse einer beliebigen Kombination von Typen aufweist.

6. Kommunikationsstation (10), umfassend eine elektronische Einheit (11), eine Antenne zum Senden/Empfangen, eine Stromversorgung (12) für die Versorgung der besagten elektronischen Einheit (11) mit elektrischem Strom, einschließlich einer Windturbine (1), wobei die Antenne und die Windturbine eine einzelne Vorrichtung nach einem beliebigen der Ansprüche 1 bis 5 sind.

7. Die Kommunikationsstation nach Anspruch 6, umfassend einen Rotor (13) und einen Stator (14), wobei die elektronische Einheit (11) in den Rotor (13) eingebettet ist.

8. Die Kommunikationsstation nach Anspruch 6, umfassend einen Rotor (13) und einen Stator (14), wobei die besagte elektronische Einheit (11) in einen rotierenden Teil (15), welcher an dem Rotor (13) befestigt ist, und einen statischen Teil (16), welcher an dem Stator (14) befestigt ist, getrennt ist, wobei die Signale zwischen dem rotierenden Teil (15) und dem statischen Teil (16) der besagten elektronischen Einheit (11) über eine drahtlose Verbindung (17) übertragen werden.

9. Die Kommunikationsstation nach Anspruch 8, wobei die besagte elektronische Einheit (11) in einen rotierenden Teil (15), welcher an dem Rotor (13) befestigt ist, und einen statischen Teil (16), welcher an dem Stator (14) befestigt ist, getrennt ist, so dass die zwischen dem rotierenden Teil (15) und dem statischen Teil (16) der besagten elektronischen Einheit (11) ausgetauschten Signale IQ-Funk-Abtastsignale gemäß den CPRI-Empfehlungen sind.

10. Die Kommunikationsstation nach einem beliebigen der Ansprüche 6 bis 9, wobei die Stromversorgung (12) weiterhin Solarzellen (18) umfasst.

11. Die Kommunikationsstation nach einem beliebigen der Ansprüche 6 bis 10, wobei die Kommunikationsstation eine Basis-Sendestation für Mobilfunk ist.

## Revendications

1. Dispositif comprenant une antenne et une turbine éolienne (1), ladite antenne comprenant des facettes rayonnantes d'émission/réception (4) et ladite turbine éolienne (1) ayant au moins une pale (2) de turbine éolienne, **caractérisé en ce que** ladite turbine éolienne (1) comprend un axe vertical (7) et lesdites facettes rayonnantes d'émission/réception (4) de l'antenne sont incorporées dans certaines desdites pales de turbine éolienne (2).

2. Dispositif selon la revendication 1, dans lequel les pales de turbine éolienne (2) incorporant les facettes rayonnantes d'émission/réception (4) de l'antenne sont des pales statiques (5).

3. Dispositif selon la revendication 1 ou 2, dans lequel les pales de turbine éolienne (2) incorporant les facettes rayonnantes d'émission/réception (4) de l'antenne sont des pales rotatives (6).

4. Dispositif selon la revendication 3, dans lequel le même signal radio est transmis à toutes les facettes d'émission (4) pour être émis.

5. Dispositif selon l'une quelconque des revendications 1 à 4, dans lequel la turbine éolienne (1) est d'un type quelconque à axe vertical, y compris le type Darrieus, Savonius ou Magnus ou toute combinaison des types à axe vertical.

6. Station de communication (10) comprenant une unité électronique (11), une antenne pour l'émission/la réception, une alimentation électrique (12) pour fournir de l'énergie électrique à ladite unité électronique (11) comprenant une turbine éolienne (1), l'antenne et la turbine éolienne (1) étant un dispositif unique selon l'une quelconque des revendications 1 à 5.

7. Station de communication selon la revendication 6, comprenant un rotor (13) et un stator (14), l'unité électronique (11) étant intégrée dans le rotor (13).

8. Station de communication selon la revendication 6, comprenant un rotor (13) et un stator (14), ladite unité électronique (11) étant divisée en une partie rotative (15) fixée au rotor (13) et une partie statique (16) fixée au stator (14), les signaux entre la partie rotative (15) et la partie statique (16) de ladite unité électronique (11) étant transmis par le biais d'une liaison

9. Station de communication selon la revendication 8, ladite unité électronique (11) étant divisée en une partie rotative (15) fixée au rotor (13) et une partie statique (16) fixée au stator (14) de sorte que les signaux échangés entre la partie rotative (15) et la partie statique (16) de ladite unité électronique (11) sont des échantillons radio IQ conformément aux recommandations CPRI.

10. Station de communication selon l'une quelconque des revendications 6 à 9, l'alimentation électrique (12) comprenant en outre des cellules solaires (18).

11. Station de communication selon l'une quelconque des revendications 6 à 10, la station de communication étant une station émettrice de base pour la téléphonie mobile.
